# EUROPEAN PATENT APPLICATION

(11) **EP 4 282 828 A1**
(43) Date of publication of application: **29.11.2023**
(21) Application number: 22774012.3
(22) Date of filing: 03.03.2022
(51) Int. Cl.: C01G 53/00, H01M 4/36, H01M 4/505, H01M 4/525, H01M 4/62, H01M 4/131, H01M 10/0525

(54) **COBALT-FREE POSITIVE ELECTRODE MATERIAL, PREPARATION METHOD THEREFOR AND APPLICATION THEREOF**

(30) Priority: 26.03.2021 CN 202110328422
(71) Applicant: SVOLT ENERGY TECHNOLOGY CO., LTD, Changzhou, Jiangsu 213200 (CN)
(72) Inventor: XU, Xinpei, hangzhou, Jiangsu 213200 (CN); JIANG, Weijun, hangzhou, Jiangsu 213200 (CN); CHEN, Sixian, hangzhou, Jiangsu 213200 (CN); ZHENG, Xiaoxing, hangzhou, Jiangsu 213200 (CN)
(74) Representative: Groth & Co. KB
(86) International application number: PCT/CN2022/079067
(87) International publication number: WO 2022/199350

(57) **Abstract**

Provided is a method for preparing a cobalt-free positive electrode material, the method comprising the following steps: (1) mixing lithium titanate and a metal source, carrying out a primary sintering treatment, adding a carbon source, and carrying out a secondary sintering treatment to obtain a carbon-coated, metal-doped lithium titanate additive; (2) mixing a lithium source with a cobalt-free precursor, and performing a high-temperature treatment to obtain a substrate material; and (3) mixing the carbon-coated, metal-doped lithium titanate additive with the substrate material, and then performing a heat treatment to obtain a cobalt-free positive electrode material. Further provided are a cobalt-free positive electrode material prepared by means of the preparation method, a positive electrode sheet including the positive electrode material, and a lithium-ion battery including the positive electrode sheet. In the preparation method, the doped lithium titanate is used to improve the conductivity of a material. In addition, the lithium titanate material is a zero-strain material, and the cycle performance of the material can be improved after the cobalt-free positive electrode material is coated.

## Description

### TECHNICAL FIELD

The present disclosure belongs to lithium-ion batteries and relates to, for example, a cobalt-free positive electrode material, a preparation method therefor and application thereof.

### BACKGROUND

Lithium-ion batteries have advantages of high energy density, good cycle performance and the like and have been widely applied to various fields of automobiles, electronic products and the like. Positive electrode materials serve as core materials of the lithium-ion batteries, so performance of the positive electrode materials directly affects performance of the lithium-ion batteries. The common positive electrode materials include lithium cobaltate, lithium iron phosphate, lithium manganate, lithium nickelate and the like, existing promising one is a ternary positive electrode material, for example, NCM (NiₓCo_{y}Mn_{z}), NCA (NiₓCo_{y}Al_{z}) and the like, and a ternary material has advantages of high density, long cycle life and the like. However, a cobalt element, as a strategic resource, is not only high in price, but also causes pollution to the environment, and these adverse factors directly limit development of the ternary material.

A cobalt-free layered positive electrode material gets rid of restriction from the cobalt element and has advantages of high reversible specific capacity, low price and the like, thereby being more and more popular with the energy industry. But, the lack of the Co element directly causes decrease of conductivity of the ternary material, and also causes structural instability, which causes low capacity and shortened life and other issues of the batteries.

### SUMMARY OF THE INVENTION

The present disclosure provides a cobalt-free positive electrode material, a preparation method therefor and application thereof. The preparation method includes the following steps: (1) mixing lithium titanate and a metal source, carrying out a primary sintering treatment, then adding a carbon source, and carrying out a secondary sintering treatment to obtain a carbon-coated metal-doped lithium titanate additive; (2) mixing a lithium source with a cobalt-free precursor, and performing a high-temperature treatment to obtain a substrate material; and (3) mixing the carbon-coated metal-doped lithium titanate additive obtained in step (1) with the substrate material obtained in step (2), and then performing a heat treatment to obtain a cobalt-free positive electrode material. The present disclosure uses modified lithium titanate to improve the conductivity of a material, and doped lithium titanate can improve the conductivity of the material without affecting a structure of pure lithium titanate itself and also improve the conductivity of the material after being coated. In addition, the lithium titanate material is a zero-strain material, and the cycle performance of the material can be improved after the cobalt-free positive electrode material is coated.

A method for preparing a cobalt-free positive electrode material is provided in an embodiment of the present disclosure and includes the following steps:
(1) mixing lithium titanate and a metal source, carrying out a primary sintering treatment, then adding a carbon source, and carrying out a secondary sintering treatment to obtain a carbon-coated metal-doped lithium titanate additive;
(2) mixing a lithium source with a cobalt-free precursor, and performing a high-temperature treatment to obtain a substrate material; and
(3) mixing the carbon-coated metal-doped lithium titanate additive obtained in step (1) with the substrate material obtained in step (2), and then performing a heat treatment to obtain a cobalt-free positive electrode material.

An operation order of step (1) and step (2) in the preparation method is not specifically limited in the present disclosure, for example, step (1) may be performed before or after step (2).

The present disclosure uses modified lithium titanate to improve the conductivity of a material, and doped lithium titanate can improve the conductivity of the material without affecting a structure of pure lithium titanate itself and also improve the conductivity of the material after being coated. In addition, the lithium titanate material is a zero-strain material, and the cycle performance of the material can be improved after the cobalt-free positive electrode material is coated.

In an embodiment, the metal source in step (1) includes any one or a combination of at least two of oxides, nitrates, carbonates or sulfates of Ti, Zr, Mg, Zn, Al, W, Nb, Sr or Y.

In an embodiment, the carbon source includes glucose and/or sucrose.

In an embodiment, based on the mass of the carbon-coated metal-doped lithium titanate additive as 100%, an addition amount of the metal source is in a range from 0.05% to 0.3%, for example, 0.05%, 0.1%, 0.2%, 0.3%, or the like.

In an embodiment, an addition amount of the carbon source is in a range from 0.5% to 3%, for example, 0.5%, 1%, 2%, 3%, or the like.

In an embodiment, the primary sintering is carried out in an oxygen atmosphere.

In an embodiment, the primary sintering is carried out at a temperature of ranging from 500°C to 800°C, for example, 500°C, 550°C, 600°C, 700°C, 800°C, or the like.

In an embodiment, the primary sintering is carried out for a time period of ranging from 5 h to 8 h, for example, 5 h, 6 h, 7 h, 8 h, or the like.

In an embodiment, the secondary sintering is carried out in a nitrogen atmosphere.

In an embodiment, the secondary sintering is carried out at a temperature of ranging from 200°C to 500°C, for example, 200°C, 300°C, 400°C, 450°C, 500°C, or the like.

In an embodiment, the chemical formula of the cobalt-free precursor in step (2) is NiₓMn_{y}(OH)₂, wherein 0.50≤x≤0.95, for example, 0.5, 0.6, 0.7, 0.8, 0.9, 0.95 or the like, and 0.05≤y≤0.50, for example, 0.05, 0.1, 0.2, 0.3, 0.4, 0.5 or the like.

In an embodiment, the mixing is carried out at a velocity of ranging from 2000 rpm to 3000 rpm, for example, 2000 rpm, 2200 rpm, 2400 rpm, 2600 rpm, 2800 rpm, 3000 rpm, or the like.

In an embodiment, the mixing is carried out for a time period of ranging from 10 min to 20 min, for example, 10 min, 12 min, 14 min, 16 min, 20 min, or the like.

In an embodiment, the high-temperature treatment is performed in an oxygen atmosphere.

In an embodiment, an oxygen concentration ranges from 90% to 100%, for example, 90%, 92%, 94%, 96%, 98%, 100%, or the like.

In an embodiment, an oxygen flow velocity ranges from 2 L/min to 20 L/min, for example, 2 L/min, 5 L/min, 10 L/min, 15 L/min, 20 L/min, or the like.

In an embodiment, the high-temperature treatment is performed at a temperature of ranging from 800°C to 1000°C, for example, 800°C, 850°C, 900°C, 950°C, 1000°C, or the like.

In an embodiment, the high-temperature treatment is performed for a time period of ranging from 8 h to 12 h, for example, 8 h, 9 h, 10 h, 11 h, 12 h, or the like.

In an embodiment, in step (3), a mass ratio of the substrate material to the carbon-coated metal-doped lithium titanate additive is (97-99.9):(0.1-3), for example, 97:3, 98:2, 97.5:2.5, 98.5: 1.5, 99.9:0.1, or the like.

In an embodiment, the mixing in step (3) is carried out at a velocity of ranging from 2000 rpm to 3000 rpm, for example, 2000 rpm, 2200 rpm, 2400 rpm, 2600 rpm, 2800 rpm, 3000 rpm, or the like.

In an embodiment, the mixing is carried out for a time period of ranging from 10 min to 20 min, for example, 10 min, 12 min, 14 min, 16 min, 20 min, or the like.

In an embodiment, the heat treatment is carried out at a temperature of ranging from 200°C to 800°C, for example, 200°C, 300°C, 400°C, 600°C, 800°C, or the like.

In an embodiment, the heat treatment is carried out for a time period of ranging from 4 h to 8 h, for example, 4 h, 5 h, 6 h, 7 h, 8 h, or the like.

In an embodiment, a sieving is performed after the heat treatment.

In an embodiment, a sieve mesh for the sieving has a mesh size ranging from 300 mesh to 400 mesh, for example, 300 meshes, 320 meshes, 350 meshes, 380 meshes, 400 meshes, or the like.

A cobalt-free positive electrode material is provided in an embodiment of the present disclosure and is prepared through the above method.

In an embodiment, the cobalt-free positive electrode material is of a layered structure in a single crystal morphology.

In an embodiment, the cobalt-free positive electrode material has a median size D50 of ranging from 1 µm to 5 µm, for example, 1 µm, 2 µm, 3 µm, 4 µm, 5 µm, or the like.

In an embodiment, the cobalt-free positive electrode material has a specific surface area of ranging from 0.2 m²/g to 0.9 m²/g, for example, 0.2 m²/g, 0.4 m²/g, 0.6 m²/g, 0.8 m²/g, 0.9 m²/g, or the like.

In an embodiment, the cobalt-free positive electrode material has the amount of residual lithium of less than 0.3 wt%, for example, 0.3 wt%, 0.25 wt%, 0.2 wt%, 0.15 wt%, or the like.

In an embodiment, the cobalt-free positive electrode material has a content of free water of less than 200 ppm, for example, 2000 ppm, 1800 ppm, 1500 ppm, 1200 ppm, 1000 ppm, or the like.

In an embodiment, cobalt-free positive electrode material has pH of less than 12, for example, 11.9, 11.8, 11.5, 11.2, 11, or the like.

A positive electrode sheet is provided in an embodiment of the present disclosure and includes the above cobalt-free positive electrode material.

A lithium ion battery is provided in an embodiment of the present disclosure and includes the above positive electrode sheet.

### BRIEF DESCRIPTION OF THE DRAWINGS

Accompanying drawings, constituting a part of the specification, provide further understanding for the technical solutions herein and, together with the embodiments of the present application, serve to explain the technical solutions herein instead of forming a limitation on the technical solutions herein.
FIG. 1 is an SEM diagram of a cobalt-free positive electrode material in Embodiment 1 of the present disclosure.
FIG. 2 is an SEM enlarged view of a cobalt-free positive electrode material in Embodiment 1 of the present disclosure.
FIG. 3 is an SEM diagram of a cobalt-free positive electrode material in Comparative Example 1 of the present disclosure.
FIG. 4 is an SEM enlarged view of a cobalt-free positive electrode material in Comparative Example 1 of the present disclosure.

### DETAILED DESCRIPTION

### Embodiment 1

The embodiment provides a cobalt-free positive electrode material. The cobalt-free positive electrode material is prepared through the following method.
(1) 10.00 g of lithium titanate is mixed with 0.0167 g of titanium dioxide, roasting is performed for 6 h at 600°C under an oxygen atmosphere to obtain doped lithium titanate, the doped lithium titanate is mixed with 0.0250 g of glucose, and roasting is performed for 5 h at 300°C under a nitrogen atmosphere to obtain a carbon-coated metal-doped lithium titanate additive.
(2) 48.00 g of LiOH is mixed with 100.00 g of Ni_{0.75}Mn_{0.25}(OH)₂, and a heat treatment is performed for 10 h at 900°C with an oxygen concentration being 95% and an oxygen flow being 5 L/min to obtain a substrate material.
(3) 0.8000 g of the carbon-coated metal-doped lithium titanate additive obtained in step (1) is mixed with 80.00 g of the substrate material obtained in step (2), and then a heat treatment is performed for 6 h at 300°C in an oxygen environment, and a sieving is performed by a 300-mesh sieve to obtain a cobalt-free positive electrode material with a coating amount being 2%.

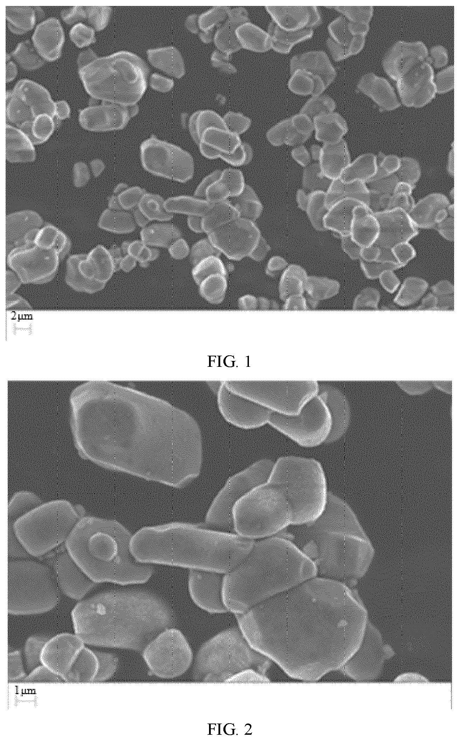

An SEM diagram of the cobalt-free positive electrode material is shown in FIGS. 1 to 2.

### Embodiment 2

The embodiment provides a cobalt-free positive electrode material. The cobalt-free positive electrode material is prepared through the following method.
(1) 10.00 g of lithium titanate is mixed with 0.0135 g of zirconium dioxide, roasting is performed for 5 h at 700°C under an oxygen atmosphere to obtain doped lithium titanate, the doped lithium titanate is mixed with 0.0250 g of fructose, and roasting is performed for 5 h at 350°C under a nitrogen atmosphere to obtain a carbon-coated metal-doped lithium titanate additive.
(2) 48.00 g of LiOH is mixed with 100.00 g of Ni_{0.75}Mn_{0.25}(OH)₂, and a heat treatment is performed for 11 h at 950°C with an oxygen concentration being 96% and an oxygen flow being 6 L/min to obtain a substrate material.
(3) 1.200 g of the carbon-coated metal-doped lithium titanate additive obtained in step (1) is mixed with 80.00 g of the substrate material obtained in step (2), and then a heat treatment is performed for 5.5 h at 350°C in an oxygen atmosphere, and a sieving is performed by a 350-mesh sieve to obtain a cobalt-free positive electrode material with a coating amount being 1.5%.

### Embodiment 3

A difference between this embodiment and Embodiment 1 lies in that a temperature of the heat treatment in step (3) is 200°C, and other conditions and parameters are completely the same as those of Embodiment 1.

### Embodiment 4

A difference between this embodiment and Embodiment 1 lies in that a temperature of the heat treatment in step (3) is 800°C, and other conditions and parameters are completely the same as those of Embodiment 1.

### Embodiment 5

A difference between this embodiment and Embodiment 1 lies in that in step (3), a mass of the carbon-coated metal-doped lithium titanate additive is 0.0800 g, a cobalt-free positive electrode material with a coating amount being 0.1% is obtained, and other conditions and parameters are completely the same as those of Embodiment 1.

### Embodiment 6

A difference between this embodiment and Embodiment 1 lies in that in step (3), a mass of the carbon-coated metal-doped lithium titanate additive is 2.400 g, a cobalt-free positive electrode material with a coating amount being 3% is obtained, and other conditions and parameters are completely the same as those of Embodiment 1.

### Comparative Example 1

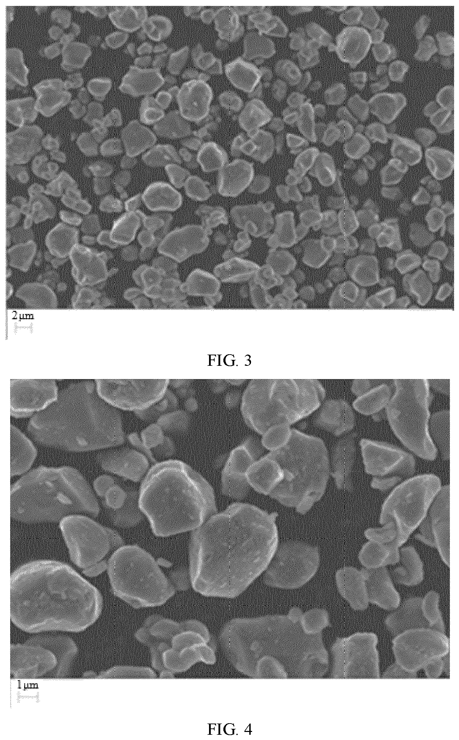

A difference between this comparative example and Embodiment 1 lies in that the substrate material obtained in step (2) is directly used as the cobalt-free positive electrode material, and other conditions and parameters are completely the same as those of Embodiment 1. An SEM diagram of the cobalt-free positive electrode material is shown in FIGS. 3 to 4.

### Performance test:

Cobalt-free positive electrode materials finally obtained in Embodiment 1 to Embodiment 6 and Comparative Example 1 are subjected to a button half-battery charge and discharge test, specifically, the positive electrode material, PVDF and an SP conductive agent are mixed according to a ratio of 92:4:4, NMP is added to adjust a solid content of paste to be 50%; then the paste is uniformly applied on an aluminum foil to be dried for 12 h in 100°C so as to obtain an electrode sheet; and then the electrode sheet is cut into a round piece with a diameter being 12 mm, battery assembling is performed in a glovebox, and a negative electrode is a lithium tablet. Test results are shown in Table 1:

**Table 1**

| | 0.1C charge specific capacity (mAh/g) | 0.1C discharge specific capacity (mAh/g) | First efficiency (%) | 1C discharge specific capacity (mAh/g) | 50-week capacity retention ratio (%) | DCR (mS2) |
|---|---|---|---|---|---|---|
| Embodiment 1 | 222.4 | 193.9 | 87.2 | 175.9 | 93.8 | 7.98 |
| Embodiment 2 | 220.9 | 191.7 | 86.8 | 174.7 | 94.1 | 7.55 |
| Embodiment 3 | 221.7 | 192.3 | 86.7 | 174.8 | 93.2 | 7.86 |
| Embodiment 4 | 215.4 | 186.7 | 86.7 | 168.2 | 91.3 | 21.21 |
| Embodiment 5 | 220.2 | 191.4 | 86.9 | 172.1 | 92.7 | 29.4 |
| Embodiment 6 | 213.8 | 182.7 | 85.5 | 164.3 | 98.6 | 43.2 |
| Comparative Example 1 | 219.1 | 189.1 | 86.3 | 166.9 | 91.6 | 33.7 |

It may be seen from Table 1 that through comparison of Embodiment 1 to Embodiment 6, 0.1C charge specific capacity of a battery made of the cobalt-free positive electrode material provided in an embodiment of the present disclosure may reach 220.2 mAh/g or above, its 0.1C discharge specific capacity may reach 182.7 mAh/g or above, a first battery efficiency may reach 85.5% or above, 1C discharge specific capacity may reach 164.3 mAh/g or above, a 50-week capacity retention ratio may reach 91.3% or above, DCR may reach 43.2 mS2 or below, by adjusting a coating amount of the carbon-coated metal-doped lithium titanate additive and a temperature of the heat treatment, 0.1C charge specific capacity may reach 222.4 mAh/g, 0.1C discharge specific capacity may reach 193.9 mAh/g, the first battery efficiency may reach 87.2%, 1C discharge specific capacity may reach 175.9 mAh/g, the 50-week capacity retention ratio may reach 98.6%, and DCR may reach 7.55 mΩ.

It may be known by comparison of Embodiment 1 and Embodiment 3 to Embodiment 4 that the temperature of the heat treatment in step (3) may affect performance of the obtained cobalt-free positive electrode material, the temperature is controlled to range from 200°C to 800°C through the heat treatment, and the cobalt-free positive electrode material with good performance may be obtained.

It may be known by comparison of Embodiment 1 and Embodiment 5 to Embodiment 6 that the coating amount of the carbon-coated metal-doped lithium titanate additive may affect performance of the obtained cobalt-free positive electrode material, the coating amount of the carbon-coated metal-doped lithium titanate additive is controlled to range from 0.1% to 3%, and the cobalt-free positive electrode material with a good effect may be obtained.

It may be known by comparison of Embodiment 1 and Comparative Example 1 that the present disclosure improves conductivity of the material through a lithium titanate coating agent which is subjected to coating modification. In addition, lithium titanate is a zero-strain material, in a cycle process, a mechanical strength of the material is enhanced, so that the cycle performance of the material is improved, and meanwhile, through introduction of a coating agent with good conductivity, DCR of the material is reduced remarkably.

## Claims

1. A method for preparing a cobalt-free positive electrode material, the method comprising the following steps:
(1) mixing lithium titanate and a metal source, carrying out a primary sintering treatment, then adding a carbon source, and carrying out a secondary sintering treatment to obtain a carbon-coated metal-doped lithium titanate additive;
(2) mixing a lithium source with a cobalt-free precursor, and performing a high-temperature treatment to obtain a substrate material; and
(3) mixing the carbon-coated metal-doped lithium titanate additive obtained in step (1) with the substrate material obtained in step (2), and then performing a heat treatment to obtain a cobalt-free positive electrode material.

2. The method of claim 1, wherein the metal source in step (1) comprises any one or a combination of at least two of oxides, nitrates, carbonates or sulfates of Ti, Zr, Mg, Zn, Al, W, Nb, Sr or Y; and the carbon source comprises glucose and/or sucrose.

3. The method of claim 1 or 2, wherein based on the mass of the carbon-coated metal-doped lithium titanate additive as 100%, and an addition amount of the metal source is in a range from 0.05% to 0.3%; and an addition amount of the carbon source is in a range from 0.5% to 3%.

4. The method of any one of claims 1 to 3, wherein the primary sintering in step (1) is carried out in an oxygen atmosphere, at a temperature of ranging from 500°C to 800°C, for a time period of ranging from 5 h to 8 h.

5. The method of any one of claims 1 to 4, wherein the secondary sintering in step (1) is carried out in a nitrogen atmosphere, at a temperature of ranging from 200°C to 500°C.

6. The method of any one of claims 1 to 5, wherein the chemical formula of the cobalt-free precursor in step (2) is NiₓMn_{y}(OH)₂, wherein 0.50≤x≤0.95, and 0.05<y<0.50.

7. The method of any one of claims 1 to 6, wherein the mixing in step (2) is carried out at a velocity of ranging from 2000 rpm to 3000 rpm, for a time period of ranging from 10 min to 20 min; the high-temperature treatment is performed in an oxygen atmosphere with an oxygen concentration of ranging from 90% to 100% and an oxygen flow velocity of ranging from 2 L/min to 20 L/min.

8. The method of any one of claims 1 to 7, wherein the high-temperature treatment in step (2) is performed at a temperature of ranging from 800°C to 1000°C, for a time period of ranging from 8 h to 12 h.

9. The method of any one of claims 1 to 8, wherein a mass ratio of the substrate material to the carbon-coated metal-doped lithium titanate additive in step (3) is (97-99.9):(0.1-3).

10. The method of any one of claims 1 to 9, wherein the mixing in step (3) is carried out at a velocity of ranging from 2000 rpm to 3000 rpm, for a time period of ranging from 10 min to 20 min.

11. The method of any one of claims 1 to 10, wherein the heat treatment in step (3) is carried out at a temperature of ranging from 200°C to 800°C, for a time period of ranging from 4 h to 8 h, and a sieving is performed after the heat treatment, and a sieve mesh for the sieving has a mesh size ranging from 300 mesh to 400 mesh.

12. A cobalt-free positive electrode material, prepared through the method of any one of claims 1 to 10.

13. The cobalt-free positive electrode material of claim 12, wherein the cobalt-free positive electrode material is of a layered structure in a single crystal morphology, and the cobalt-free positive electrode material has a median size D50 of ranging from 1 µm to 5 µm, a specific surface area of ranging from 0.2 m²/g to 0.9 m²/g, the amount of residual lithium of less than 0.3 wt%, a content of free water of less than 200 ppm, and pH of less than 12.

14. A positive electrode sheet, comprising the cobalt-free positive electrode material of claim 12 or 13.

15. A lithium ion battery, comprising the positive electrode sheet of claim 14.
